# EUROPEAN PATENT SPECIFICATION

(11) **EP 3 037 750 B1**
(45) Date of publication and mention of the grant of the patent: **12.08.2020**
(21) Application number: 15202276.0
(22) Date of filing: 23.12.2015
(51) Int. Cl.: F25D 19/04, F25D 11/02, F25D 21/04, F25B 47/02, F25D 21/00, F25B 49/02

(54) **REFRIGERATOR AND A METHOD FOR CONTROLLING THE SAME**
KÜHLSCHRANK UND EIN VERFAHREN ZUR STEUERUNG DESSELBEN
RÉFRIGÉRATEUR ET UN PROCÉDÉ DE COMMANDE DE CELUI-CI

(30) Priority: 23.12.2014 KR 20140187426
(43) Date of publication of application: 29.06.2016
(73) Proprietor: LG Electronics Inc., Seoul 07336 (KR)
(72) Inventor: CHOI, Hojin, 08592 Seoul (KR)
(74) Representative: Vossius & Partner Patentanwälte Rechtsanwälte mbB

(56) References cited:
- EP-A2- 1 407 700
- EP-A2- 2 565 564

## Description

The present invention relates to a refrigerator, and a method for controlling the same.

A refrigerator is an apparatus keeping foods fresh using cold air generated by a refrigeration cycle. For example, a refrigerator may include a compressor, a condenser, an expansion valve, and an evaporator.

EP 2 565 564 A2 relates to a refrigerator according to the preamble of claim 1. The refrigerator includes a first storage chamber, a second storage chamber spatially-separated from the first storage chamber, a first refrigeration cycle system to cool the first storage chamber using a first refrigeration cycle, and a second refrigeration cycle system installed to be separated from the first refrigeration cycle system to cool the second storage chamber using a second refrigeration cycle in an independent manner from the first refrigeration cycle. The first and second storage chambers maintain first and second target temperatures, respectively. The first and second refrigeration cycle systems circulate different kinds of refrigerants to cool the first and second storage chambers, respectively.

Therefore, an aspect of the detailed description is to provide a method for controlling a refrigerator capable of preventing dew condensation at a contact part between a body and a door of a refrigerator having two cooling cycles.

Another aspect of the detailed description is to provide a method for controlling a refrigerator capable of enhancing power efficiency of a refrigerator having two cooling cycles.

To achieve these and other advantages and in accordance with the purpose of this specification, as embodied and broadly described herein, there is provided a refrigerator according to claim 1. The refrigerator includes:
a first cooling cycle by which a refrigerant compressed by a first compressor returns to the first compressor via a first condenser; a second cooling cycle by which a refrigerant compressed by a second compressor returns to the second compressor via a second condenser, the second cooling circulated independently from the first cooling cycle; and a controller for controlling a radiating fan for the first and second condensers, based on an operation state of the first and second compressors, wherein the first cooling cycle is provided with a hot line disposed between a body and a door of the refrigerator,
wherein the hot line is connected to the first condenser, and wherein an average operation time of the freezing cycle is longer than an average operation time of the refrigerating cycle, for a predetermined time interval.

In an embodiment, when only the first compressor is operated, the controller may control an rpm of the radiating fan into a first value, such that a heat radiation amount of the refrigerant passing through the hot line at the condenser is reduced.

In an embodiment, when only the second compressor is operated, the controller may control the rpm of the radiating fan into a second value larger than the first value.

In an embodiment, a humidity sensor may be arranged on a front surface of the refrigerator. When only the first compressor is operated, if a humidity at the front surface of the refrigerator is more than a preset value as a sensing result by the humidity sensor, the controller may control the rpm of the radiating fan into the first value. On the other hand, if the humidity at the front surface of the refrigerator is less than the preset value, the controller may control the rpm of the radiating fan into the second value larger than the first value.

In an embodiment, when both of the first and second compressors are operated, the controller may control the rpm of the radiating fan into a third value larger than the first and second values.

To achieve these and other advantages and in accordance with the purpose of this specification, as embodied and broadly described herein, there is also provided a method according to claim 13 for controlling a refrigerator. The method includes: determining whether first and second cooling cycles are operated; and controlling a radiating fan for first and second condensers included in the first and second cooling cycles, based on an operation state of the first and second cooling cycles, wherein the first cooling cycle is provided with a hot line disposed between a body and a door of the refrigerator, wherein the hot line is connected to the first condenser, and wherein an average operation time of the freezing cycle is longer than an average operation time of the refrigerating cycle, for a predetermined time interval.

In an embodiment, the controlling a radiating fan may include controlling an rpm of the radiating fan into a first value when only the first cooling cycle is operated, such that a heat radiation amount of a refrigerant passing through the hot line at the first condenser is reduced.

In an embodiment, the controlling a radiating fan may include controlling the rpm of the radiating fan into a second value larger than the first value when only the second cooling cycle is operated.

In an embodiment, the method may further include sensing a humidity at a front surface of the refrigerator, before the controlling a radiating fan. The controlling a radiating fan may include controlling the rpm of the radiating fan into a second value larger than the first value, if a humidity at the front surface of the refrigerator is more than a preset value as a sensing result when only the first compressor is operated.

In an embodiment, the controlling a radiating fan may include controlling the rpm of the radiating fan into a third value larger than the first and second values, when both of the first and second compressors are operated.

The present invention may have the following effects.

Firstly, as the rpm (rotation speed) of the mechanical chamber fan of the refrigerator having two cooling cycles is controlled, dew condensation generated at a contact part between the door and the body may be prevented.

Secondly, power efficiency of the refrigerator having two cooling cycles may be enhanced.

Further scope of applicability of the present invention will become more apparent from the detailed description given hereinafter. However, it should be understood that the detailed description and specific examples, while indicating preferred embodiments of the invention, are given by way of illustration only, since various changes and modifications within the scope of the invention, as defined in the claims, will become apparent to those skilled in the art from the detailed description.
FIG. 1 is a diagram illustrating example two cooling cycles of a refrigerator.
FIGS. 2A and 2B are diagrams illustrating example two cooling cycles of a refrigerator.
FIG. 3 is a flowchart illustrating an example method for controlling a refrigerator on two cooling cycles.
FIGS. 4 and 5 are flowcharts illustrating example methods of controlling a refrigerator on two cooling cycles.
FIG. 6 is a graph illustrating an example rpm of a mechanical chamber fan per unitary time.

Like reference numbers and designations in the various drawings indicate like elements.

A refrigerator i includes a freezing chamber and a refrigerating chamber that are divided by a barrier filled with an insulator.

During the cool air supplying process, cool air heat-exchanged with a refrigerant of a low temperature and a low pressure in an evaporator is partially supplied into the freezing chamber or the refrigerating chamber by a blower.

The cool air supplied into the refrigerating chamber free-falls through a cool air duct installed at a rear side of the refrigerating chamber in a lengthwise direction. Then, the cool air is discharged from a rear side of the refrigerator toward a front side of the refrigerator, through a plurality of cool air discharge openings formed on a front surface of the cool air duct.

Through such processes, the cool air supplied to at least one of the freezing chamber and the refrigerating chamber has a high temperature through a contact with food stored in the freezing chamber or the refrigerating chamber. Then, the air of a high temperature moves to a peripheral region of the evaporator, through a return duct formed in the barrier.

Each of the freezing chamber and the refrigerating chamber is configured to be open and closed by a door, and a door basket for storing food is installed in the refrigerating chamber door with multi stages.

Next, a process to supply cool air to each part of the refrigerating chamber will be explained in more detail. A damper is installed in the cool air duct into which cool air heat-exchanged in the evaporator is introduced, and a cool air shielding film is installed at the damper. The damper is driven based on a temperature sensed by temperature sensors provided on right and left walls inside the refrigerating chamber. As the cool air shielding film is open and closed, cool air is introduced into the cool air duct. A flow path along which cool air is transferred to each part of the refrigerating chamber is formed in the cool air duct.

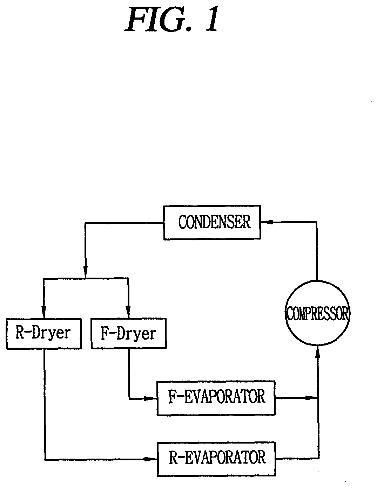

FIG. 1 illustrates example two cooling cycles of a refrigerator. The two cooling cycles include a first cooling cycle and a second cooling cycle. The same compressor and condenser can be used for the first cooling cycle and the second cooling cycle.

In some implementations, the first cooling cycle is implemented by a compressor, a condenser, a first evaporator, and may be by a first dryer, and a first capillary tube. On the other hand, the second cooling cycle may be implemented by the compressor, the condenser, a second evaporator, and may be by a second dryer and a second capillary tube.

In some other examples, not forming part of the claimed invention, the first and second cooling cycles can be implemented by the same compressor and condenser. Once a controller of the refrigerator operates the compressor in order to cool inside of the refrigerator, a refrigerant compressed by the compressor may become a super coolant fluid having a high temperature of about 35°, while passing through the condenser. If the first cooling cycle is operated, the controller may be configured to control the compressed refrigerant to pass through the first dryer. The first dryer may filter moisture and impurities from the compressed refrigerant. Further, the refrigerant may become a refrigerant having a low pressure and a low dryness while passing through the first capillary tube. The refrigerant of a low dryness may have an evaporation temperature of about -90° while passing through the first evaporator, and then may return to the first compressor.

During the second cooling cycle, the controller may be configured to control the compressed refrigerant to pass through the second dryer, the second capillary tube, and the second evaporator. A temperature of the refrigerant at the compressor, the condenser, the first evaporator and the second evaporator may be variable based on setting information of the refrigerator.

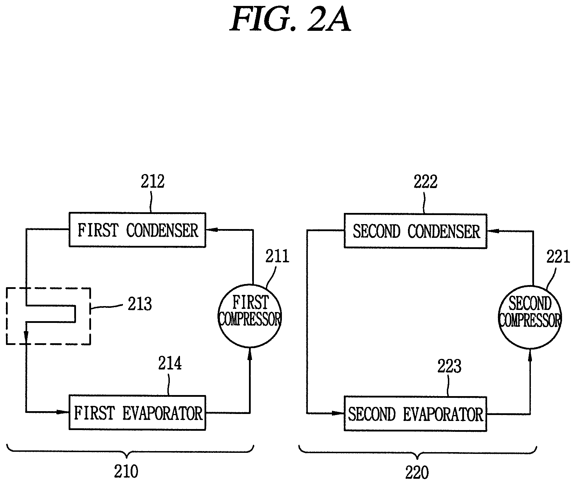

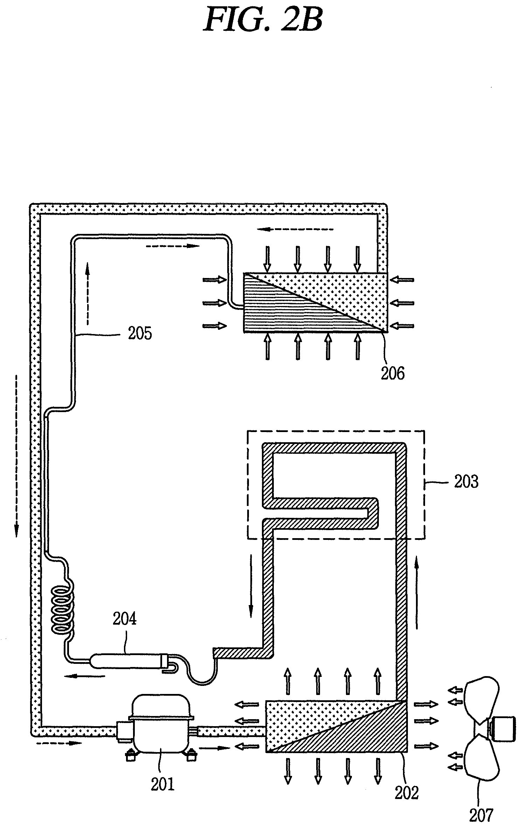

FIG. 2A and 2B illustrates example operations of two cooling cycles in a refrigerator according to the claimed invention.

As shown in FIG. 2A, the refrigerator operates on two cooling cycles 210, 220. During the first cooling cycle 210, a refrigerant compressed by a first compressor 211 returns to the first compressor 211 via a first condenser 212 and a first evaporator 214. In particular, the first cooling cycle 210 is provided with a hot refrigerant channel 213 disposed between a body and a door. For example, the refrigerant channel 213 may be provided between the first condenser 212 and the first evaporator 214.

During the second cooling cycle 220, a refrigerant compressed by a second compressor 221 returns to the second compressor 221 via a second condenser 222 and a second evaporator 223.

Referring to FIG. 2A, different compressors 211, 221 can be used for each of the first and second cooling cycles 210, 220. In some implementations, as shown in FIG. 1, a same compressor can be used for a first and a second cooling cycles.

Referring back to FIG. 2A, the first and second evaporators 214, 223 may be configured to evaporate a refrigerant after heat-exchanging the refrigerant with air inside the refrigerator. Evaporator inlet passages, along which a refrigerant having passed through a capillary tube is guided to the evaporators, may be connected to the evaporators 214, 223. The evaporators 214, 223 can be connected to the compressors 211, 221 through the evaporator inlet passages. A refrigerant evaporated by the evaporators 214, 223 may be sucked into the compressors 211, 221 through connection passages between the evaporators 214, 223 and the compressors 211, 221. The evaporators 214, 223 may be installed on an external wall of an inner casing, or may be installed in the inner casing.

In some implementations, the refrigerator may be configured as a direct-cooling type refrigerator for cooling an inner casing by an evaporator, and for cooling a storage chamber by convection and natural convection of air inside the refrigerator.

In some other implementations, the refrigerator may be configured as an indirect-cooling type refrigerator for cooling a storage chamber as air inside the refrigerator circulates the storage chamber and an evaporator in a forcible manner, the evaporator installed outside the storage chamber. The refrigerator may further include an evaporator fan for blowing air inside the refrigerator to the evaporator.

The compressors 211, 221 may suck a refrigerant evaporated by the evaporators 214, 223, compress the sucked refrigerant, and then discharge the compressed refrigerant. The compressors 211, 221 are connected to the condensers 212, 222 through connection passages between the compressors 211, 221 and the condensers 212, 222. The refrigerant compressed by the compressors 211, 221 is guided to the condensers 212, 222 through the connection passages between the compressors 211, 221 and the condensers 212, 222. The compressors 211, 221 may be installed at a mechanical chamber of the refrigerator.

The condensers 212, 222 condense a refrigerant compressed by the compressors 211, 221. Condenser outlet passages, through which a refrigerant having passed through the condensers 212, 222 flows, may be connected to the condensers 212, 222. The condenser outlet passage may be connected to an outlet of each condenser. The condensers 212, 222 may be installed at a mechanical chamber of the refrigerator, or may be installed to be exposed to the outside of the refrigerator. The mechanical chamber may be provided with a mechanical chamber fan for radiating heat of a refrigerant passing through the condensers 212, 222. The mechanical chamber fan may correspond to a radiating fan with respect to a refrigerant which circulates along the first and second cooling cycles.

The hot refrigerant channel 213 is installed such that a refrigerant having passed through the first condenser 212 removes dew inside the refrigerator by evaporating the dew. The hot refrigerant channel 213 is installed at a contact part between the body and the door. The hot refrigerant channel 213 includes a refrigerant pipe installed at a contact part between the body and the door. The hot refrigerant channel 213 may be installed between an outer casing and an inner casing of the body, and may be configured to radiate heat through the outer casing. A gaseous refrigerant, among a refrigerant having passed through the condenser, may be condensed by radiating heat while the gaseous refrigerant passes through the hot refrigerant channel 213. Dew formed at a contact part between the body and the door may be removed by heat of the hot refrigerant channel 213. A refrigerant may pass through the hot refrigerant channel 213 when the first cooling cycle 210 is operated and the second cooling cycle is not operated. While the second cooling cycle 220 is operated, a refrigerant may not pass through the refrigerant channel 213.

FIG. 2B illustrates an example first cooling cycle. As shown in FIG. 2B, a compressor 201 and a condenser 202 for the first cooling cycle may be arranged at a mechanical chamber. A refrigerant passing through the condenser 202 may radiate heat by a radiating fan 207, e.g. a mechanical chamber fan, of the mechanical chamber. The controller may control an amount of heat radiated from a refrigerant passing through the condenser by controlling an rpm of the radiating fan 207.

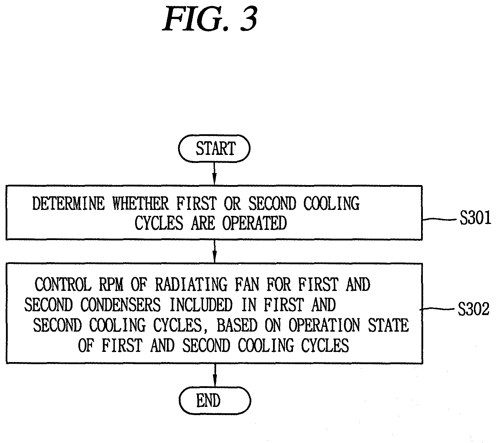

FIG. 3 illustrates an example method of controlling a refrigerator operating on two cooling cycles. As shown in FIG. 3, a controller of the refrigerator may determine whether first and second cooling cycles are operated (S301). In particular, the controller may determine whether the first and second cooling cycles are operated, based on information on an operation state of the first and second compressors. If the first compressor is being operated, the controller may determine that the first cooling cycle is being operated. If the second compressor is being operated, the controller may determine that the second cooling cycle is being operated.

The controller may turn on/off the first and second compressors. The controller may turn on/off the first compressor by determining whether a condition for driving the first cooling cycle has been satisfied. Likewise, the controller may turn on/off the second compressor by determining whether a condition for driving the second cooling cycle has been satisfied.

Then, the controller may control a rotation speed (rpm) of the radiating fan for the first and second condensers included in the first and second cooling cycles, based on an operation state of the first and second cooling cycles (S302).

In particular, when the first cooling cycle is operated and the second cooling cycle is not operated, the controller may control the rpm of the radiating fan into a preset first value, such that a heat radiation amount of a refrigerant passing through the refrigerant channel at the first condenser is reduced.

Further, when both of the first and second cooling cycles are operated, the controller may control the rpm of the radiating fan into a third value larger than the first and second values.

For instance, the preset first value may be 930 RPM, the preset second value may be 1090 RPM, and the preset third value may be 1300 RPM. However, the preset first to third values related to a rotation speed (rpm) of the radiating fan are not limited to this, but may be set with consideration of power efficiency of the refrigerator, etc.

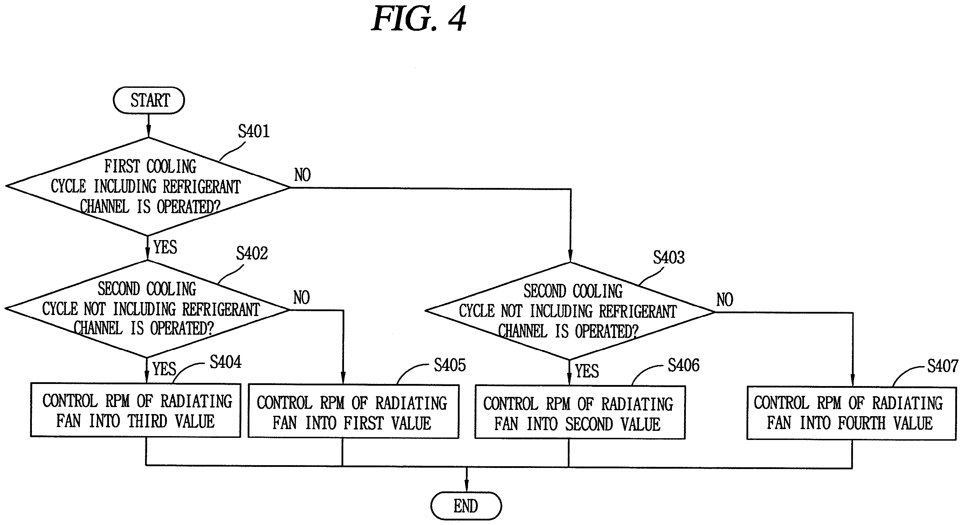

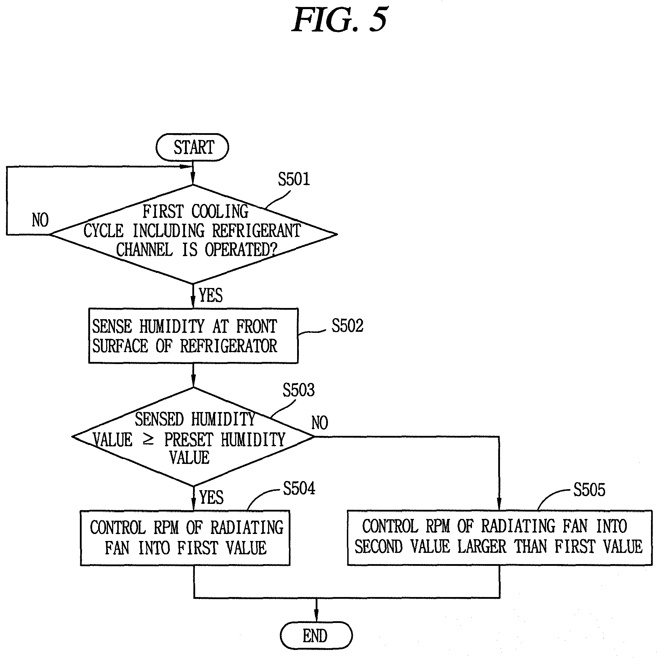

FIGS. 4 and 5 illustrate flowcharts for example methods of controlling a refrigerator on two cooling cycles. The controller may determine whether the first cooling cycle including a refrigerant channel is operated or not (S401). Then, the controller may determine whether the second cooling cycle not including the refrigerant channel is operated or not (S402, S403).

And the controller may control the rpm of the radiating fan based on an execution result of the steps S401, S402, S403 (S404, S405, S406, S407).

In particular, when the first cooling cycle is operated and the second cooling cycle is not operated, the controller may control the rpm of the radiating fan into a first value (S404). When the second cooling cycle is operated and the first cooling cycle is not operated, the controller may control the rpm of the radiating fan into a second value (S405). When both of the first and second cooling cycles are operated, the controller may control the rpm of the radiating fan into a third value (S406). If neither the first cooling cycle nor the second cooling cycle is operated, the controller may control the rpm of the radiating fan into a fourth value (S407).

In some implementations, the first to fourth values may be preset values related to the rpm of the radiating fan. The preset first value may be smaller than an rpm of a radiating fan of a refrigerator having a single cooling cycle. With such a configuration, even if a time duration for driving the refrigerant channel is reduced more than in a refrigerator having a single cooling cycle, dew condensation generated between the body and the door may be prevented.

The second value may be configured to be larger than the first value. For example, if the first cooling cycle being operated is converted into the second cooling cycle not including the refrigerant channel, the controller may increase the rpm of the radiating fan to the second value from the first value (S405). As the rpm of the radiating fan is increased to the second value from the first value, a heat radiation amount of a refrigerant passing through the second condenser when the second cooling cycle is operated, may be larger than that of a refrigerant passing through the first condenser when the first cooling cycle is operated. That is, a refrigerant temperature of the second cooling cycle may be lower than that of the first cooling cycle. This may allow power efficiency of the refrigerator to be increased when the second cooling cycle is operated.

In some implementations, the first cooling cycle may correspond to a freezing cycle (F-cycle), and the second cooling cycle may correspond to a refrigerating cycle (R-cycle). In some other implementations, for a predetermined time interval, an average operation time of a freezing cycle may be longer than an average operation time of a refrigerating cycle. That is, a ratio between an operation time of the first cooling cycle and an operation time of the second cooling cycle, for a predetermine time interval, may be 7:3.

For example, the first cooling cycle may represent a freezing cycle, and the second cooling cycle may represent a refrigerating cycle, and vice versa.

In the example below, for convenience, a first cooling cycle may represent a freezing cycle, and a second cooling cycle' may represent a refrigerating cycle.

During the freezing cycle, cool air may be supplied to the freezing chamber of the refrigerator. During the refrigerating cycle, cool air may be supplied to the refrigerating chamber of the refrigerator.

The third value may be larger than the first and second values. For example, when both of the first and second cooling cycles are operated, the controller may increase the rpm of the radiating fan into the third value from the first value or the second value (S406).

More specifically, the controller senses a change amount of a load inside the refrigerator, and operates both of the first and second cooling cycles when the change amount of the load exceeds a reference value as a sensing result. The controller may control the rpm of the radiating fan into the third value.

In some implementations, if a predetermined time lapses after the rpm of the radiating fan has been set into the third value, the controller may reduce the rpm of the radiating fan.

The fourth value may be smaller than the first to third values. That is, if neither the first cooling cycle nor the second cooling cycle is operated, the controller may reduce the rpm of the radiating fan into the fourth value (S407). In some implementations, if it is determined that neither the first cooling cycle nor the second cooling cycle is operated, the controller may turn off the radiating fan to control the rpm of the radiating fan into '0'.

If a sensed amount of an electrical load of the radiating fan is more than a reference value, the controller may reduce the rpm of the radiating fan, or may turn off the radiating fan.

Referring to FIG. 5, the controller may determine whether the first cooling cycle including the refrigerant channel is operated (S501).

A humidity sensor disposed on a front surface of the refrigerator may sense a humidity at the front surface of the refrigerator (S502). More specifically, the humidity sensor may sense a humidity at a contact part between the body and the door. Further, the humidity sensor may sense a humidity in a specific space adjacent to a contact part between the body and the door.

The controller may compare a humidity sensed by the humidity sensor with a preset humidity value (S503). In this case, the preset humidity value may be set according to an external temperature and a pressure of the refrigerator. As the external temperature and the pressure of the refrigerator are changed, the controller may change the preset humidity value. The preset humidity value may be set according to a user's input.

If the humidity at the front surface of the refrigerator is more than a preset value as a sensing result by the humidity sensor, the controller may control the rpm of the radiating fan into the first value (S504).

On the other hand, if the humidity at the front surface of the refrigerator is less than the preset value as a sensing result by the humidity sensor, the controller may control the rpm of the radiating fan into the second value larger than the first value (S505).

More specifically, if it is determined that dew condensation is not generated at a contact part between the body and the door, based on information sensed by the humidity sensor without operating the refrigerant channel, the controller may increase the rpm of the radiating fan into the second value from the first value.

The controller may determine an operation time of the refrigerant channel, based on information sensed by the humidity sensor. That is, if a humidity value sensed by the humidity sensor is larger than a reference value, the controller may increase an operation time of the refrigerant channel. On the contrary, if the humidity value sensed by the humidity sensor is smaller than the reference value, the controller may decrease the operation time of the refrigerant channel.

A temperature sensor and a pressure sensor may be further provided on the front surface of the refrigerator. In this case, the controller may control the rpm of the radiating fan based on information sensed by the temperature sensor and the pressure sensor.

More specifically, the controller may calculate a difference between a temperature value sensed by the temperature sensor and a temperature value of the body. Then, the controller may control the rpm of the radiating fan or may determine an operation time of the refrigerant channel, according to a result of the calculation.

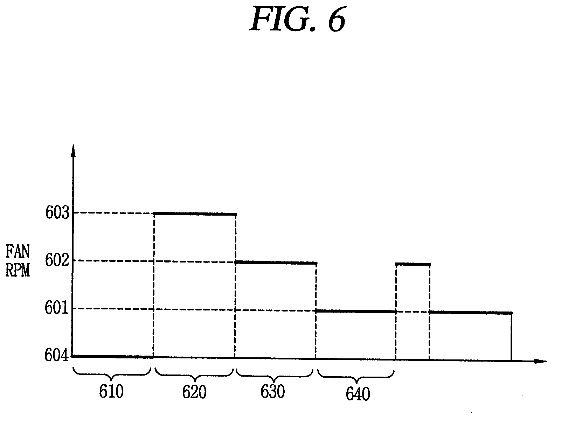

FIG. 6 illustrates a graph of a rotation speed of a mechanical chamber fan per unitary time. when the first cooling cycle is operated and the second cooling cycle is not operated (640), the controller may control the rpm of the radiating fan (mechanical chamber fan) into the first value (601). When the second cooling cycle is operated and the first cooling cycle is not operated (630), the controller may control the rpm of the radiating fan into the second value (602) larger than the first value. When both of the first and second cooling cycles are operated (620), the controller may control the rpm of the radiating fan into the third value (603) larger than the first and second values. When neither the first cooling cycle nor the second cooling cycle is operated (620), the controller may control the rpm of the radiating fan into the fourth value (604) smaller than the first, the second, and the third values. For instance, the first value may be 930 RPM, the second value may be 1090 RPM, the third value may be 1300 RPM, and the fourth value may be 0 RPM. However, the first to fourth values may be differently set according to a user's input for controlling performance or the rpm of the radiating fan.

Some examples of the subject matter described in this specification can be implemented so as to realize one or more of the following advantages. An rpm of a radiating fan of a refrigerator operating on two cooling cycles is controlled. This may prevent occurrence of dew condensation between a body and a door of the refrigerator. Further, power efficiency of the refrigerator may be enhanced.

## Claims

1. A refrigerator including a body, a door, a freezing chamber and a refrigerating chamber, comprising:
- a freezing cycle including:
a first compressor (211) configured to compress a first refrigerant; and
a first condenser (212) configured to return the first refrigerant to the first compressor (211);
- a refrigerating cycle including:
a second compressor (221) configured to compress a second refrigerant; and
a second condenser (222) configured to return the second refrigerant to the second compressor (221), wherein the second refrigerant is independently cycled from the first refrigerant;
a radiating fan for the first condenser (212) and the second condenser (222); and
- a controller configured to control the radiating fan for the first condenser (212) and the second condenser (222) based on an operation state of the first compressor (211) and the second compressor (221), **characterized by** further comprising:
a hot refrigerant channel (213) configured to allow the first refrigerant to pass therethrough and being located between the body and the door of the refrigerator,
wherein the hot refrigerant channel (213) includes a refrigerant pipe installed at a contact part between the body and the door,
wherein the hot refrigerant channel (213) is coupled to the first condenser (212),
wherein, for a predetermined time interval, an average operation time of the first compressor (211) in the freezing cycle is longer than an average operation time of the second compressor (221) in the refrigerating cycle, and
wherein the controller is configured to operate the freezing cycle for supplying a cool air to the freezing chamber, to operate the refrigerating cycle for supplying a cool air to the refrigerating chamber, and to operate both the freezing cycle and the refrigerating cycle when a change amount of a load of the refrigerator exceeds a reference value.

2. The refrigerator of claim 1, wherein, the controller is configured to, based on a determination that the first compressor (211) is operating while the second compressor (221) does not operate, control an rpm of the radiating fan at a first value that reduces an amount of heat radiated from the first refrigerant passing through the hot refrigerant channel (213).

3. The refrigerator of claim 2, wherein the controller is configured to, based on a determination that the second compressor (221) is operating while the first compressor (211) does not operate, control the rpm of the radiating fan at a second value that is larger than the first value.

4. The refrigerator of claim 3, further comprising a humidity sensor located on a front surface of the refrigerator,
wherein the controller is configured to, based on a determination that the first compressor (211) is operating while the second compressor (221) does not operate and a determination that humidity at the front surface of the refrigerator sensed by the humidity sensor satisfies a preset value, control the rpm of the radiating fan at the first value, and
wherein the controller is configured to, based on a determination that humidity at the front surface of the refrigerator sensed by the humidity sensor does not satisfy a preset value, control the rpm of the radiating fan at the second value.

5. The refrigerator of claim 3, wherein the controller is configured to, based on a determination that both of the first compressor (211) and the second compressor (221) are operating, control the rpm of the radiating fan at a third value that is larger than the second value.

6. The refrigerator of claim 5, wherein the controller is configured to perform operations comprising:
determining whether a certain time lapses after the rpm of the radiating fan is set at the third value, and
reducing the rpm of the radiating fan based on the determination.

7. The refrigerator of claim 5, wherein the controller is configured to, based on a determination that the first compressor (211) and the second compressor (221) are not operating, control the rpm of the radiating fan at a fourth value that is smaller than the first, the second, and the third values.

8. The refrigerator of claim 5, wherein the controller is configured to, based on a determination that the first compressor (211) and the second compressor (221) are not operating, turn off the radiating fan.

9. The refrigerator of claim 5, wherein the controller is configured to sense an amount of an electrical load of the radiating fan, and
wherein the controller is configured to, based on a determination that the sensed amount of the electrical load of the radiating fan is more than satisfies a reference value, reduce the rpm of the radiating fan.

10. The refrigerator of claim 5, wherein the first value is 930 RPM, the second value is 1090 RPM, and the third value is 1300 RPM.

11. The refrigerator of any one of claims 1 to 10, further comprising:
a first evaporator, wherein the hot refrigerant channel (213) is located between the first condenser (212) and a first evaporator (214).

12. The refrigerator of claim 6, wherein refrigerant does not pass through the hot refrigerant channel (213) in the refrigerating cycle.

13. A method for controlling a refrigerator including a body, a door, a freezing chamber and a refrigerating chamber, comprising:
determining whether a freezing cycle or a refrigerating cycle are operated; and
controlling a radiating fan for a first condenser (212) and a second condenser (222) during the freezing cycle or the refrigerating cycle based on a determination that the freezing cycle or the refrigerating cycle is operated,
wherein a hot refrigerant channel (213), located between a body and a door of the refrigerator, is provided in the freezing cycle,
wherein the hot refrigerant channel (213) is coupled to the first condenser (212),
wherein the hot refrigerant channel (213) includes a refrigerant pipe installed at a contact part between the body and the door,
wherein, for a predetermined time interval, an average operation time of the first compressor (211) in the freezing cycle is longer than an average operation time of the second compressor (221) in the refrigerating cycle, and
wherein the freezing cycle is configured to supply a cool air to the freezing chamber,
wherein the refrigerating cycle is configured to supply a cool air to the refrigerating chamber, and
wherein the freezing cycle and the refrigerating cycle are operated when a change amount of a load of the refrigerator exceeds a reference value.

14. The method of claim 13, wherein the controlling a radiating fan is comprising:
controlling, based on a determination that the freezing cycle is operated while the refrigerating cycle is not operated, an rpm of the radiating fan at a first value to reduce an amount of heat radiated from a refrigerant passing through the hot refrigerant channel (213).

15. The method of claim 14, wherein the controlling a radiating fan is comprising:
controlling, based on a determination that the refrigerating cycle is operated while the freezing cycle is not operated, the rpm of the radiating fan at a second value that is larger than the first value.

## Patentansprüche

1. Kühlschrank mit einem Körper, einer Tür, einer Gefrierkammer und einer Kühlkammer, der aufweist:
- einen Gefrierkreislauf mit:
einem ersten Verdichter (211), der ausgebildet ist, ein erstes Kühlmittel zu verdichten;
und
einem ersten Kondensator (212), der ausgebildet ist, das erste Kühlmittel zum ersten Verdichter (211) zurückzuführen;
- einen Kühlkreislauf mit:
einem zweiten Verdichter (221), der ausgebildet ist, ein zweites Kühlmittel zu verdichten; und
einem zweiten Kondensator (222), der ausgebildet ist, das zweite Kühlmittel zum zweiten Verdichter (221) zurückzuführen, wobei das zweite Kühlmittel unabhängig vom ersten Kühlmittel zirkuliert wird;
- einen Drehlüfter für den ersten Kondensator (212) und den zweiten Kondensator (222); und
- eine Steuerung, die ausgebildet ist, den Drehlüfter für den ersten Kondensator (212) und den zweiten Kondensator (222) basierend auf einem Betriebszustand des ersten Verdichters (211) und des zweiten Verdichters (221) zu steuern,
**dadurch gekennzeichnet, dass** der Kühlschrank ferner aufweist:
einen Kanal (213) für warmes Kühlmittel, der so ausgebildet ist, dass das erste Kühlmittel durch ihn hindurchströmen kann, und der zwischen dem Körper und der Tür des Kühlschranks angeordnet ist,
wobei der Kanal (213) für warmes Kühlmittel ein Kühlmittelrohr aufweist, das an einem Kontaktteil zwischen dem Körper und der Tür montiert ist,
wobei der Kanal (213) für warmes Kühlmittel mit dem ersten Kondensator (212) verbunden ist,
wobei, für eine vorgegebene Zeitdauer, eine durchschnittliche Betriebszeit des ersten Verdichters (211) im Gefrierkreislauf länger als eine durchschnittliche Betriebszeit des zweiten Verdichters (221) im Kühlkreislauf ist, und
wobei die Steuerung ausgebildet ist, den Gefrierkreislauf zum Zuführen von kalter Luft zur Gefrierkammer zu betreiben, den Kühlkreislauf zum Zuführen von kalter Luft zur Kühlkammer zu betreiben, und sowohl den Gefrierkreislauf als auch den Kühlkreislauf zu betreiben, wenn ein Änderungsbetrag einer Last des Kühlschranks einen Referenzwert übersteigt.

2. Kühlschrank nach Anspruch 1, wobei die Steuerung ausgebildet ist, basierend auf einer Bestimmung, dass der erste Verdichter (211) arbeitet während der zweite Verdichter (221) nicht arbeitet, eine Drehzahl des Drehlüfters auf einen ersten Wert zu steuern, der eine Wärmemenge reduziert, die von dem ersten Kühlmittel abgestrahlt wird, das durch den Kanal (213) für warmes Kühlmittel strömt.

3. Kühlschrank nach Anspruch 2, wobei die Steuerung ausgebildet ist, basierend auf einer Bestimmung, dass der zweite Verdichter (221) arbeitet während der erste Verdichter (211) nicht arbeitet, die Drehzahl des Drehlüfters auf einen zweiten Wert zu steuern, der größer als der erste Wert ist.

4. Kühlschrank nach Anspruch 3, der ferner einen Feuchtigkeitssensor aufweist, der an einer vorderen Fläche des Kühlschranks angeordnet ist,
wobei die Steuerung ausgebildet ist, basierend auf einer Bestimmung, dass der erste Verdichter (211) arbeitet während der zweite Verdichter (221) nicht arbeitet, und einer Bestimmung, dass Feuchtigkeit an der vom Feuchtigkeitssensor abgetasteten vorderen Fläche des Kühlschranks einem voreingestellten Wert entspricht, die Drehzahl des Drehlüfters auf den ersten Wert zu steuern, und
wobei die Steuerung ausgebildet ist, basierend auf einer Bestimmung, dass Feuchtigkeit an der vom Feuchtigkeitssensor abgetasteten vorderen Fläche des Kühlschranks einem voreingestellten Wert nicht entspricht, die Drehzahl des Drehlüfters auf den zweiten Wert zu steuern.

5. Kühlschrank nach Anspruch 3, wobei die Steuerung ausgebildet ist, basierend auf einer Bestimmung, dass sowohl der erste Verdichter (211) als auch der zweite Verdichter (221) arbeiten, die Drehzahl des Drehlüfters auf einen dritten Wert zu steuern, der größer als der zweite Wert ist.

6. Kühlschrank nach Anspruch 5, wobei die Steuerung ausgebildet ist, Betriebsschritte durchzuführen, die aufweisen:
Bestimmen, ob eine bestimmte Zeit vergeht, nachdem die Drehzahl des Drehlüfters auf den dritten Wert eingestellt wurde, und
Reduzieren der Drehzahl des Drehlüfters basierend auf der Bestimmung.

7. Kühlschrank nach Anspruch 5, wobei die Steuerung ausgebildet ist, basierend auf einer Bestimmung, dass der erste Verdichter (211) und der zweite Verdichter (221) nicht arbeiten, die Drehzahl des Drehlüfters auf einen vierten Wert zu steuern, der kleiner als der erste, der zweite und der dritte Wert ist.

8. Kühlschrank nach Anspruch 5, wobei die Steuerung ausgebildet ist, basierend auf einer Bestimmung, dass der erste Verdichter (211) und der zweite Verdichter (221) nicht arbeiten, den Drehlüfter auszuschalten.

9. Kühlschrank nach Anspruch 5, wobei die Steuerung ausgebildet ist, einen Betrag einer elektrischen Last des Drehlüfters abzutasten, und
wobei die Steuerung ausgebildet ist, basierend auf einer Bestimmung, dass der abgetastete Betrag der elektrischen Last des Drehlüfter höher als ein Referenzwert ist, die Drehzahl des Drehlüfters zu reduzieren.

10. Kühlschrank nach Anspruch 5, wobei der erste Wert 930 Umdrehungen pro Minute, der zweite Wert 1090 Umdrehungen pro Minute und der dritte Wert 1300 Umdrehungen pro Minute ist.

11. Kühlschrank nach einem der Ansprüche 1 bis 10, der ferner aufweist:
einen ersten Verdampfer, wobei der Kanal (213) für warmes Kühlmittel zwischen dem ersten Kondensator (212) und einem ersten Verdampfer (214) angeordnet ist.

12. Kühlschrank nach Anspruch 6, wobei Kühlmittel nicht durch den Kanal (213) für warmes Kühlmittel im Kühlkreislauf strömt.

13. Verfahren zum Steuern eines Kühlschranks mit einem Körper, einer Tür, einer Gefrierkammer und einer Kühlkammer, das die Schritte aufweist:
Bestimmen, ob ein Gefrierkreislauf oder ein Kühlkreislauf betrieben wird; und
Steuern eines Drehlüfters für einen ersten Kondensator (212) und einen zweiten Kondensator (222) während des Gefrierkreislaufs oder des Kühlkreislaufs basierend auf einer Bestimmung, dass der Gefrierkreislauf oder der Kühlkreislauf betrieben wird,
wobei ein Kanal (213) für warmes Kühlmittel, der zwischen einem Körper und einer Tür des Kühlschranks angeordnet ist, im Gefrierkreislauf vorgesehen ist,
wobei der Kanal (213) für warmes Kühlmittel mit dem ersten Kondensator (212) verbunden ist,
wobei der Kanal (213) für warmes Kühlmittel ein Kühlmittelrohr aufweist, das an einem Kontaktteil zwischen dem Körper und der Tür montiert ist,
wobei, für eine vorgegebene Zeitdauer, eine durchschnittliche Betriebszeit des ersten Verdichters (211) im Gefrierkreislauf länger als eine durchschnittliche Betriebszeit des zweiten Verdichters (221) im Kühlkreislauf ist, und
wobei der Gefrierkreislauf ausgebildet ist, der Gefrierkammer kalte Luft zuzuführen,
wobei der Kühlkreislauf ausgebildet ist, der Kühlkammer kalte Luft zuzuführen, und
wobei der Gefrierkreislauf und der Kühlkreislauf betrieben werden, wenn ein Änderungsbetrag einer Last des Kühlschranks einen Referenzwert übersteigt.

14. Verfahren nach Anspruch 13, wobei das Steuern eines Drehlüfters aufweist:
basierend auf einer Bestimmung, dass der Gefrierkreislauf betrieben wird, während der Kühlkreislauf nicht betrieben wird, Steuern einer Drehzahl des Drehlüfters auf einen ersten Wert, um eine Wärmemenge zu reduzieren, die von einem Kühlmittel abgestrahlt wird, das durch den Kanal (213) für warmes Kühlmittel strömt.

15. Verfahren nach Anspruch 14, wobei das Steuern eines Drehlüfters aufweist:
basierend auf einer Bestimmung, dass der Kühlkreislauf betrieben wird während der Gefrierkreislauf nicht betrieben wird, Steuern der Drehzahl des Drehlüfters auf einen zweiten Wert, der größer als der erste Wert ist.

## Revendications

1. Réfrigérateur, comprenant une carrosserie, une porte, un compartiment de congélation et un compartiment de réfrigération, présentant :
- un cycle de congélation impliquant :
un premier compresseur (211) prévu pour comprimer un premier réfrigérant ; et
un premier condensateur (212) prévu pour retourner le premier réfrigérant au premier compresseur (211) ;
- un cycle de réfrigération impliquant :
un deuxième compresseur (221) prévu pour comprimer un deuxième réfrigérant ; et
un deuxième condensateur (222) prévu pour retourner le deuxième réfrigérant au deuxième compresseur (221), le cycle du deuxième réfrigérant étant indépendant de celui du premier réfrigérant ;
- un ventilateur rayonnant pour le premier condensateur (212) et le deuxième condensateur (222) ; et
- un contrôleur prévu pour commander le ventilateur rayonnant pour le premier condensateur (212) et le deuxième condensateur (222) sur la base d'un état de fonctionnement du premier compresseur (211) et du deuxième compresseur (221), **caractérisé en ce qu'**il comprend en outre :
un canal de réfrigérant chaud (213) prévu pour permettre la passage du premier réfrigérant, prévu entre la carrosserie et la porte de réfrigérateur,
le canal de réfrigérant chaud (213) comprenant une conduite de réfrigérant prévue sur une partie de contact entre la carrosserie et la porte,
le canal de réfrigérant chaud (213) étant relié au premier condensateur (212), où, pendant un intervalle temporel défini, un temps de fonctionnement moyen du premier compresseur (211) lors du cycle de congélation est supérieur à un temps de fonctionnement moyen du deuxième compresseur (221) lors du cycle de réfrigération, et
où le contrôleur est prévu pour déclencher le cycle de congélation pour refouler de l'air froid vers le compartiment de congélation, pour déclencher le cycle de réfrigération pour refouler de l'air froid vers le compartiment de réfrigération, et pour déclencher le cycle de congélation ainsi que le cycle de réfrigération si un degré de variation d'une charge du réfrigérateur dépasse une valeur de référence.

2. Réfrigérateur selon la revendication 1, où, sur la base de la détermination que le premier compresseur (211) fonctionne pendant que le deuxième compresseur (221) ne fonctionne pas, le contrôleur est prévu pour commander la vitesse de rotation du ventilateur rayonnant à une première valeur diminuant un débit de chaleur rayonnée par le premier réfrigérant s'écoulant dans le canal de réfrigérant chaud (213).

3. Réfrigérateur selon la revendication 2, où sur la base de la détermination que le deuxième compresseur (221) fonctionne pendant que le premier compresseur (211) ne fonctionne pas, le contrôleur est prévu pour commander la vitesse de rotation du ventilateur rayonnant à une deuxième valeur supérieure à la première valeur.

4. Réfrigérateur selon la revendication 3, comprenant en outre un capteur d'humidité présenté sur une surface avant du réfrigérateur,
où, sur la base de la détermination que le premier compresseur (211) fonctionne pendant que le deuxième compresseur (221) ne fonctionne pas, et de la détermination que l'humidité détectée par le capteur d'humidité sur la surface avant du réfrigérateur satisfait à une valeur définie, le contrôleur est prévu pour commander la vitesse de rotation du ventilateur rayonnant à la première valeur, et
où, sur la base de la détermination que l'humidité détectée par le capteur d'humidité sur la surface avant du réfrigérateur ne satisfait pas à une valeur définie, le contrôleur est prévu pour commander la vitesse de rotation du ventilateur rayonnant à la deuxième valeur.

5. Réfrigérateur selon la revendication 3, où, sur la base de la détermination que le premier compresseur (211) ainsi que le deuxième compresseur (221) fonctionnent, le contrôleur est prévu pour commander la vitesse de rotation du ventilateur rayonnant à une troisième valeur supérieure à la deuxième valeur.

6. Réfrigérateur selon la revendication 5, où le contrôleur est prévu pour exécuter des opérations comprenant :
la détermination d'un intervalle temporel défini après réglage de la vitesse de rotation du ventilateur rayonnant à la troisième valeur, et
la réduction de la vitesse de rotation du ventilateur rayonnant sur la base de la détermination.

7. Réfrigérateur selon la revendication 5, où, sur la base de la détermination que le premier compresseur (211) et le deuxième compresseur (221) ne fonctionnent pas, le contrôleur est prévu pour commander la vitesse de rotation du ventilateur rayonnant à une quatrième valeur inférieure à la première, la deuxième et la troisième valeurs.

8. Réfrigérateur selon la revendication 5, où, sur la base de la détermination que le premier compresseur (211) et le deuxième compresseur (221) ne fonctionnent pas, le contrôleur est prévu pour désactiver le ventilateur rayonnant.

9. Réfrigérateur selon la revendication 5, où le contrôleur est prévu pour détecter la valeur d'une charge électrique du ventilateur rayonnant, et
où, sur la base de la détermination que la valeur détectée de la charge électrique du ventilateur rayonnant est supérieure à la valeur de référence, le contrôleur est prévu pour réduire la vitesse de rotation du ventilateur rayonnant.

10. Réfrigérateur selon la revendication 5, où la première valeur est de 930 tours/min, la deuxième valeur de 1090 tours/min et la troisième valeur de 1300 tours/min.

11. Réfrigérateur selon l'une des revendications 1 à 10, comprenant en outre :
un premier évaporateur, le canal de réfrigérant chaud (213) étant prévu entre le premier condensateur (212) et un premier évaporateur (214).

12. Réfrigérateur selon la revendication 6, où le réfrigérant ne s'écoule pas dans le canal de réfrigérant chaud (213) lors du cycle de réfrigération.

13. Procédé de commande d'un réfrigérateur comprenant une carrosserie, une porte, un compartiment de congélation et un compartiment de réfrigération, comprenant :
la détermination si un cycle de congélation ou un cycle de réfrigération sont exécutés ; et
la commande d'un ventilateur rayonnant pour un premier condensateur (212) et un deuxième condensateur (222) pendant le cycle de congélation ou le cycle de réfrigération sur la base de la détermination de l'exécution du cycle de congélation ou du cycle de réfrigération,
où un canal de réfrigérant chaud (213), présenté entre la carrosserie et une porte du réfrigérateur, est prévu lors du cycle de congélation,
où le canal de réfrigérant chaud (213) est relié au premier condensateur (212),
où le canal de réfrigérant chaud (213) comprend une conduite de réfrigérant prévue sur une partie de contact entre la carrosserie et la porte,
où, pendant un intervalle temporel défini, un temps de fonctionnement moyen du premier compresseur (211) lors du cycle de congélation est supérieur à un temps de fonctionnement moyen du deuxième compresseur (221) lors du cycle de réfrigération, et
où le cycle de congélation est prévu pour refouler de l'air froid vers le compartiment de congélation,
où le cycle de réfrigération est prévu pour refouler de l'air froid vers le compartiment de réfrigération, et
où le cycle de congélation et le cycle de réfrigération sont déclenchés si un degré de variation d'une charge du réfrigérateur dépasse une valeur de référence.

14. Procédé selon la revendication 13, où la commande d'un ventilateur rayonnant comprend :
sur la base de la détermination que le cycle de congélation est activé alors que le cycle de réfrigération n'est pas activé, la commande de la vitesse de rotation du ventilateur rayonnant à une première valeur pour diminuer un débit de chaleur rayonnée par un réfrigérant s'écoulant dans le canal de réfrigérant chaud (213).

15. Procédé selon la revendication 14, où la commande d'un ventilateur rayonnant comprend :
sur la base de la détermination que le cycle de réfrigération est activé alors que le cycle de congélation n'est pas activé, la commande de la vitesse de rotation du ventilateur rayonnant à une deuxième valeur supérieure à la première valeur.
